# DEMANDE DE BREVET EUROPEEN

(11) **EP 2 525 304 A1**
(43) Date de publication de la demande: **21.11.2012**
(21) Numéro de dépôt: 11305594.1
(22) Date de dépôt: 17.05.2011
(51) Int. Cl.: G06K 19/077

(54) **Dispositif transpondeur radiofréquence à circuit résonant passif optimisé**

(71) Demandeur: Gemalto SA, 92190 Meudon (FR)
(72) Inventeur: Lahoui, Nizar, 13400 AUBAGNE (FR); Buyukkalender, Arek, 13013 MARSEILLE (FR); Seban, Frédérick, 13260 CASSIS (FR)

(57) **Abrégé**

Dispositif transpondeur radiofréquence à circuit résonant passif optimisé.

L'invention concerne un dispositif radiofréquence (1A) comprenant une antenne passive (24, 34) accordée ou destinée à être accordée en fréquence avec au moins un transpondeur (22, 22b),
- ledit transpondeur comprenant une puce de circuit intégré (16) reliée à une interface à antenne (28) définissant une périphérie (P) de surface de couplage électromagnétique,
- ladite antenne passive comprenant une boucle principale (24) formée de spires comprenant au moins une portion de surface (B) à l'intérieur de la boucle, au moins un renfoncement (R, R2) de la boucle principale orienté de l'intérieur vers l'extérieur de la boucle principale ;

Le dispositif se distingue en ce que ladite portion de surface (B) est localisée dans ledit renfoncement (R, R2) pour effectuer un couplage électromagnétique avec un circuit transpondeur.

## Description

L'invention concerne le domaine des transpondeurs radiofréquences à antenne passive et la structure de ces transpondeurs radiofréquences.

Plus particulièrement, l'invention concerne des supports à puce sans contact tel que des cartes à puce sans contact dont la communication est amplifiée par une antenne passive.

L'invention peut également viser des systèmes de documents de voyage électroniques sans contact tels que passeports électroniques et visas électroniques sous forme de transpondeurs disposés ensemble. En particulier, ces documents et visas sont conformes aux spécifications de l'ICAO (acronyme de l'expression anglo-saxonne "International Civil Aviation Organization") et norme ISO/IEC 14443.

Le document US 6 378 774 illustré aux figures 1 et 2 décrit une carte à puce comprenant un module de circuit intégré (2) à interfaces de communication à contacts et à antenne. Le corps de carte comprend une antenne passive qui comprend deux bobines (3,4) montées en parallèle sur une capacité, une bobine large fermée pouvant être disposée sensiblement en périphérie du corps de carte et une bobine étroite disposée centrée avec l'antenne du module. La bobine large a pour fonction de communiquer vis-à-vis d'un lecteur externe et la boucle étroite a pour fonction de se coupler et de communiquer avec le module.

Ces supports ont l'inconvénient, avec une antenne principale passive à deux boucles en forme d'un huit, de présenter une construction complexe.

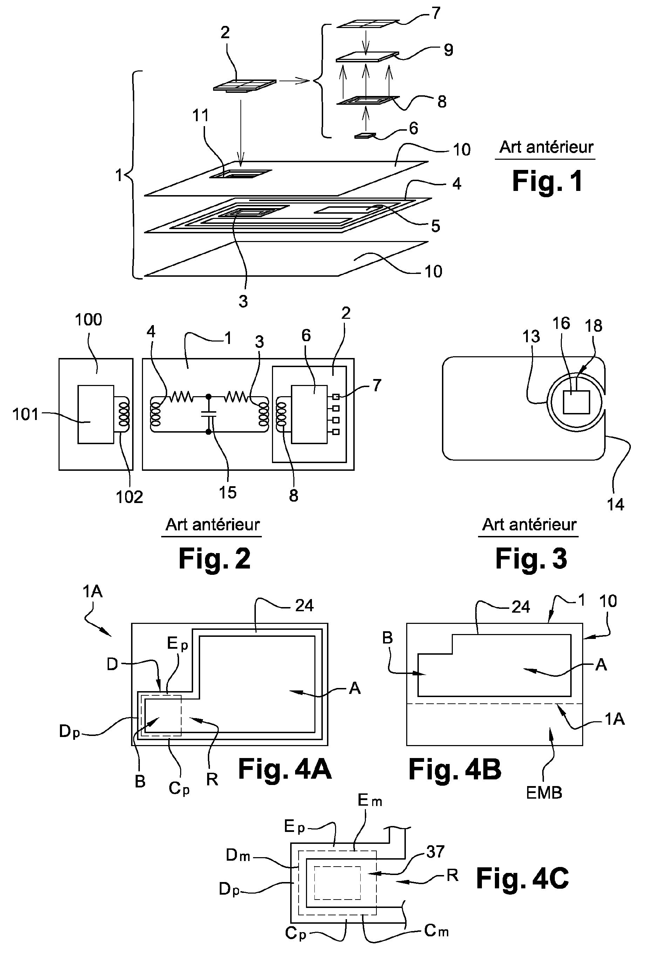

Le document US5955723 illustré à la figure 3, décrit un support de données comprenant un circuit intégré 16 relié à une première boucle de conducteur 18, au moins une seconde boucle conductrice 14 de surface de couplage correspondant approximativement à celle du support et une troisième boucle 13 appartenant à la seconde boucle et ayant approximativement les dimensions de la première boucle. Les première et troisième boucles sont disposées sensiblement concentriquement et sont couplées ensemble. Dans un mode de réalisation illustré à la figure 3 la troisième boucle est ouverte vers l'extérieur ; Elle correspond à une portion rentrante en creux ou concave de la première boucle venant de l'extérieur vers l'intérieur de la surface de couplage délimitée par la surface interne de l'antenne 14.

Le support obtenu a l'inconvénient de nécessiter une antenne passive dont la boucle principale s'étend sur la toute périphérie du support. En outre les constructions décrites ne permettent pas d'atteindre un niveau visé de performance conforme au standard ISO/IEC 14443.

On connait également un mode de réalisation de la société SPS (Smart Card Solutions) qui utilise un module à contact et à antenne disposé dans une cavité de corps de carte à puce bancaire. Ce module est couplé avec une antenne passive disposée sur presque toute la surface du corps de carte ; Il comprend des boucles sensiblement concentriques disposées en spirale autour de la cavité du module ; La première boucle adjacente à la cavité étant très large de plusieurs millimètres sous l'emplacement de la cavité de module voire 5 mm et les suivantes également pour permettre un embossage sur les spires sans risque de sectionner les spires à l'embossage. En outre, l'antenne est connectée à des plaques de condensateur métalliques disposées de part et d'autre du support d'antenne. La dernière spire s'étend en périphérie de la carte pour embrasser le plus de flux radiofréquence d'un lecteur.

Cette construction a l'inconvénient de présenter des risques de délamination dans la mesure où les feuilles plastiques constituant le corps de carte adhérent mal aux surfaces métalliques des spires de l'antenne et/ou des plaques de condensateur.

L'invention vise à résoudre les inconvénients précités. En particulier, elle vise à améliorer les performances des dispositifs radiofréquences ou transpondeurs radiofréquences mettant en oeuvre une antenne passive tout en ayant une construction plus simple à réaliser de l'antenne passive. Elle vise également à mettre en oeuvre moins de surface métallique pour l'antenne passive et/ou le condensateur associé notamment pour éviter une délamination et/ou économie de surface conductrice.

A cet effet, l'invention a pour objet un dispositif radiofréquence comprenant une antenne passive destinée à être accordée en fréquence avec au moins un transpondeur,
- ledit transpondeur comprenant une puce de circuit intégré reliée à une interface à antenne définissant une périphérie de couplage électromagnétique,
- ladite antenne passive comprenant :
   - une boucle principale formée de spires comprenant au moins une portion de surface à l'intérieur de la boucle,
   - au moins un renfoncement de la boucle principale orienté de l'intérieur vers l'extérieur de la boucle principale ;

Le dispositif se distingue en ce que ladite portion de surface (B) est localisée dans ledit renfoncement pour effectuer un couplage électromagnétique avec un circuit transpondeur.

Selon d'autres caractéristiques du dispositif :
- Plusieurs spires de l'antenne passive s'étendent où sont destinées à s'étendre sensiblement à proximité et le long de l'interface à antenne du transpondeur (ou module radiofréquence) sur plus de la moitié de la périphérie ;
- Lesdites plusieurs spires de l'antenne passive sont positionnées ou destinées à être positionnées à l'aplomb des spires de ladite interface de module;
- Lesdites plusieurs spires de l'antenne passive s'étendent ou sont destinées à s'étendre sur plus des trois quarts de la périphérie de l'interface de module;
- Ledit renfoncement a la forme d'un « U » ou d'un « V » ouvert vers la surface interne de la boucle ;
- l'antenne passive comporte au moins deux renfoncements recevant ou destinés à recevoir chacun un transpondeur radiofréquence ;
- Le dispositif comprend ou est destiné à comprendre un premier transpondeur dans un module à contacts débouchant en surface du dispositif et un second transpondeur non débouchant ;
- Ledit premier transpondeur est conforme au standard ISO/IEC 14443 de type A et le second conforme au type B ;
- L'antenne passive s'étend sensiblement uniquement sur la moitié de la surface normalisée d'une carte bancaire ISO 7816 ; L'antenne passive s'étend en dehors d'une zone d'embossage ; La surface de couplage de l'antenne passive s'étend de préférence sur une surface qui est environ la moitié de la surface de la carte à puce ISO 7816, soit 81 x 25 mm ou moins ;
- Les branches parallèles externes du « U » sont espacées d'une distance comprise entre 5 mm à 15 mm ;
- Le renfoncement est destiné à se positionner à l'aplomb d'un module d'identification d'abonné (SIM) constituant un transpondeur radiofréquence ou étant de type NFC ; Le dispositif peut comprendre ou constituer un support souple positionnable autour d'un module d'identification d'abonné, notamment dans un boîtier de téléphone mobile pour améliorer le couplage avec un transpondeur radiofréquence ou NFC contenu dans le module.

Grâce à l'invention :
- Le motif d'antenne passive n'a pas besoin de présenter deux bobines fermées dont une est sensiblement concentrique avec l'antenne du module ;
- Une bonne fonctionnalité du produit est obtenue lors des tests ISO 14443-2 grâce au couplage optimisé entre l'antenne passive et celle du ou des modules ;
- Le renfoncement en U, V ou C permet de coupler avec une forme d'antenne passive à une seule bobine et avec une surface de couplage réduite de moitié pour permettre l'embossage sur une carte bancaire;
- L'invention assure un bon couplage avec une boucle moins étendue et moins de surface des spires ; Elle a l'avantage d'éviter un problème de délamination tout en libérant toute la surface d'embossage standard réservée à l'embossage ;
- L'invention permet de libérer de la surface occupée par l'antenne ; ainsi, une carte peut recevoir des éléments de personnalisation graphique tels que des fenêtres ou portions transparentes.

D'autres particularités et avantages de l'invention apparaîtront à la lecture de la description faite à titre d'exemple non limitatif et en regard des dessins annexés sur lesquels :
- Les figures 1 et 2 illustrent une carte à puce à interface duale selon l'art antérieur ;
- La figure 3 illustre une carte à puce sans contact de l'art antérieur;
- La figure 4A illustre une vue schématique du dispositif conforme à un mode de réalisation de l'invention;
- La figure 4B illustre une vue schématique d'une carte à puce comportant le dispositif de la figure 4A ;
- La figure 4C illustre une vue schématique du renfoncement R de la figure 4A;
- La figure 5 illustre une vue schématique d'un autre mode de réalisation du renfoncement R de la figure 4A;

Les figures 1-3 de l'art antérieur ont été décrites précédemment en introduction.
Les antennes passives sont respectivement référencées (3, 4) et (13, 14). Elles comprennent respectivement une petite boucle (3, 13) et une grande boucle (4, 14).

A la figure 3, le flux électromagnétique induit à l'intérieur de la boucle 14 est contraire à celui induit dans la boucle 13 et peut nuire à l'efficacité du couplage électromagnétique.

A la figure 4A, est représenté schématiquement un dispositif radiofréquence 1A conforme à l'invention (sans illustration d'une capacité d'accord en fréquence reliée en principe aux bornes de l'antenne). Ce dispositif est ici dans l'exemple une carte à puce sans contact et/ou à contact conforme au standard ISO 7816 et ISO/IEC 14443. Il peut constituer un passeport électronique ou autre objet sans contact comme une étiquette électronique, un badge, un ticket de transport, etc.

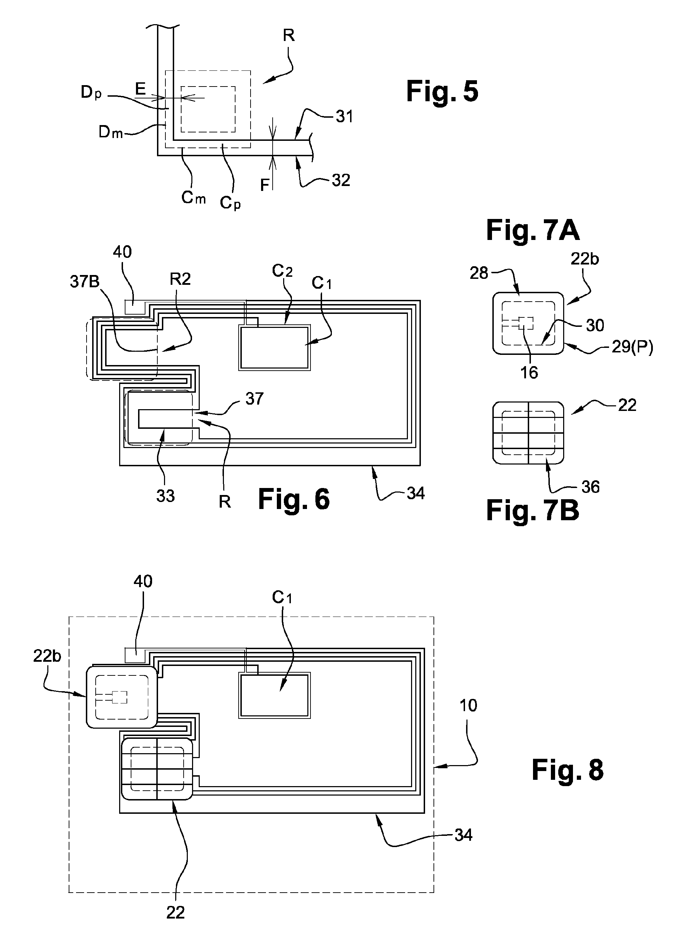

Le dispositif comprend une antenne passive 24 accordée ou destinée à être accordée en fréquence avec au moins un transpondeur radiofréquence 22 ou 22B; Le transpondeur comprend une puce de circuit intégré radiofréquence 16 reliée à une interface à antenne 28 ou 36 (ici schématisée). Une spire externe 29 de l'interface à l'antenne 28 définit une périphérie P de la surface de couplage électromagnétique du transpondeur ; Le module comprend aussi une spire interne 30. Le transpondeur peut être dans l'exemple un module à interface duale 22 (antenne et plages de contact 36 en surface du corps de carte) ou un module sans-contact de carte à puce 22b (fig. 7B).
D'une manière générale, dans le cadre de la présente description, on entend par transpondeur tout circuit électronique radiofréquence communicant à l'aide d'un champ électromagnétique et comportant une bobine connectée à un condensateur et/ou à un circuit intégré.

Les transpondeurs sont utilisés dans différents domaines économiques tels que le bancaire (porte-monnaie électronique), la communication, le transport, l'identité (e-passeport, ID-carte). Dans l'identité notamment, il est connu d'effectuer l'identification d'une personne par communication radiofréquence avec un objet électronique portable sans contact de type RFID.

Le module peut comprendre ou non un substrat isolant support des plages de contact et/ou de l'antenne. L'antenne passive peut être réalisée sur un substrat isolant par toute technique connue de l'homme de l'art notamment par incrustation de fil d'antenne, par gravure, par sérigraphie. Dans l'exemple, l'antenne est gravée.

L'antenne passive 24 comprend une boucle principale unique formée d'au moins une ou plusieurs spires ; Elle comprend au moins une portion de surface (A) à l'intérieur de la boucle pour effectuer un couplage électromagnétique avec au moins un circuit transpondeur.

De préférence, pour de meilleurs résultats de couplage et de performances satisfaisant notamment les tests du standard ISO/IEC 14443 plusieurs spires de l'antenne passive 24 s'étendent ou sont destinées à s'étendre sensiblement à proximité et le long de l'interface 28 des modules sur plus de la moitié de leur périphérie (P). C'est à dire qu'une portion du parcours des spires de l'antenne passive 24 définissant le recoin accompagne de très près et/ou est sensiblement parallèle au parcours des spires de l'interface à antenne 28 du transpondeur sur au moins une distance correspondant à la moitié de la longueur de la spire périphérique (29) P.

Dans l'exemple, s'agissant de module carte à puce, les des antennes 24 et 28 sont disposées à proximité immédiate l'une de l'autre, par exemple, séparées de moins d'un millimètre. Dans d'autres dispositifs par exemple clés USB, téléphone, cette proximité peut être plus importante par exemple de l'ordre de quelques millimètres voire un ou plusieurs centimètres.

A la figure 4B (ou 4A), on remarque que l'antenne 24 s'étend sur une demi-surface d'un corps 10 de carte à puce aux dimensions ISO 7816. La portion en recoin de l'antenne passive est en forme de lettre « U » couchée ou de la lettre « C » ; La portion forme ici un décroché de l'antenne passive 24 s'étendant vers un emplacement 37 du module pour venir englober ou contourner cet emplacement.

Grâce aux dispositions ci-dessus, la communication radiofréquence de la carte avec un lecteur est améliorée et peut être conforme au standard ISO/IEC 14443 avec simplement la moitié de la surface d'une carte à puce standard ISO 7816.
Le flux électromagnétique induit dans la surface (A) a le même sens que celui induit dans la surface B du renfoncement.

L'antenne passive peut s'étendre sensiblement sur toute la longueur de la carte même au-delà du module (à gauche sur la figure).

A la figure 4C, qui correspond à une portion agrandie du recoin extraite de la figure 4A, le recoin R est en forme de la lettre «C». Le recouvrement entre antenne principale 24 et interface à antenne 28 s'effectue respectivement sur trois de leurs côtés adjacents perpendiculaires Cp, Dp, Ep et Cm, Dm, Em.
Dans ce mode de réalisation, plusieurs spires de l'antenne passive s'étendent ou sont destinées à s'étendre sur les trois quarts ou plus de la périphérie de l'interface à antenne 28 du module.

Alternativement, l'antenne passive peut entourer un peu plus le transpondeur ou l'emplacement 37 par une portion complémentaire sans toutefois fermer complètement la surface B et l'isoler de la surface A.

L'antenne passive peut être reliée à deux plaques de condensateur C1, C2 par exemple réalisées de part et d'autre du substrat de l'antenne (alternativement, la capacité peut être réalisée par une puce de circuit intégré). Un plot 40 fixé de part et d'autre du substrat permet par leur percement et déformation de connecter les deux plaques, elles-mêmes reliées à des extrémités de l'antenne passive. L'antenne passive peut comprendre dans le renfoncement R, une spire interne 33 élargie vers la médiatrice du renfoncement R ou R2 ou vers l'intérieur de l'emplacement 37, 37B des modules 22, 22b. L'avantage est de pouvoir éventuellement usiner une cavité de module avec des tolérances de fabrication larges sans risque de couper la spire interne de l'antenne 24 ou 34 au niveau du recoin; Il est possible de prévoir ainsi plusieurs dimensions de cavité avec un même profil d'antenne passive. L'élargissement de la spire est ici uniquement dans ce renfoncement couvert par l'antenne du transpondeur.

Selon d'autres variantes de mise en oeuvre, l'invention prévoit de réaliser des capacités en série en multipliant les plaques superposées. Ces plaques ou grilles peuvent être formées avec un parcours continu d'un fil.
Par ailleurs, l'invention prévoit de réaliser des plaques ou grilles superposées sur le parcours de spires d'antenne.

Ainsi, un assemblage série de condensateurs est obtenu, soit en superposant au moins trois grilles, soit en réalisant au moins deux condensateurs sur un parcours d'une même spire (ou d'une même piste conductrice si pas d'antenne).

Par exemple au cours de la réalisation d'une spire, l'outil de guidage de fil sur le substrat réalise une plaque en zigzag ou en forme de grille quelconque, puis le fil d'un second tour ou tour subséquent de spire réalise la seconde plaque et/ou autres plaques subséquentes pour avoir des condensateurs en série les un avec les autres.
L'avantage de condensateur en série est de gagner de la surface consacrée aux plaques.

Alternativement, après avoir réalisé une première plaque, l'invention prévoit de réaliser la seconde plaque ou nième plaque dans la foulée de la première avec un fil continu, par exemple en faisant repasser le fil sur la grille qui vient d'être formée avant de poursuivre le parcours d'antenne.

Les grilles superposées formant condensateur peuvent être ajustées en coupant un fil selon la valeur de capacité désirée. Par exemple, si une portion de grille terminale est désaccouplée du circuit par sectionnement d'un fil à un endroit de la grille ou conduisant à la grille, c'est autant de capacité qui est désactivée. Autre exemple, si une portion terminale de grille contient N lignes croisant N autres lignes comme à la figure 3, l'invention prévoit de pouvoir sectionner un fil, de préférence, au niveau de lignes situées en bordure des grilles ou à distance des grilles. L'invention prévoit un tableau de correspondance, entre « N » lignes supprimées et la valeur de capacité correspondante retirée.

Le tableau ci-dessous indique les résultats obtenus avec une antenne passive selon la figure 8 et un module sensiblement conforme à la figure 7B. Le module utilisé pour les tests peut être conforme à un module standard de la société SPS. Ces valeurs satisfont amplement au standard ISO 14443 avec une demi-surface d'antenne seulement, contrairement à l'art antérieur pour un genre de produit à antenne passive.

Le tableau indique les valeurs obtenues pour les bandes latérales haute (USB) et basse (LSB). L'antenne passive peut est une antenne gravée de manière classique ; Elle possède les caractéristiques suivantes :
- Nombre de tours : 4
- Inductance : 3,2µH
- Impédance : 3,1 Ohm
- C : env. 53pF

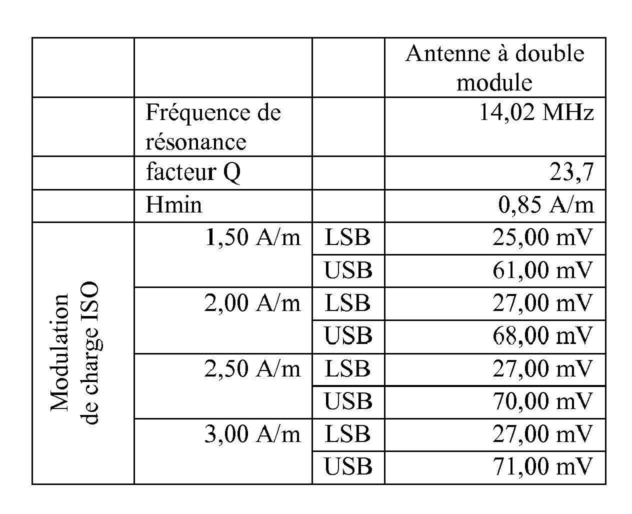

## Revendications

1. Dispositif radiofréquence comprenant une antenne passive (24) accordée ou destinée à être accordée en fréquence avec au moins un transpondeur (22, 2b),
- ledit transpondeur comprenant une puce de circuit intégré (16) reliée à une interface à antenne (28) définissant une périphérie (P) de surface de couplage électromagnétique,
- ladite antenne passive comprenant :
- une boucle principale (24) formée de spires comprenant au moins une portion de surface (B) à l'intérieur de la boucle,
- au moins un renfoncement (R, R2) de la boucle principale orienté de l'intérieur vers l'extérieur de la boucle principale,
**caractérisé en ce que** ladite portion de surface (B) est localisée dans ledit renfoncement (R, R2) pour effectuer un couplage électromagnétique avec un circuit transpondeur.

2. Dispositif selon la revendication précédente, **caractérisé en ce que** plusieurs spires de l'antenne passive s'étendent où sont destinées à s'étendre sensiblement à proximité et le long (Dm, Cm, Em) de l'interface à antenne (28) sur plus de la moitié de la périphérie (P).

3. Dispositif selon l'une quelconque des revendications précédentes, **caractérisé en ce que** lesdites plusieurs spires de l'antenne passive (24) sont positionnées ou destinées à être positionnés à l'aplomb de spires de ladite interface à antenne (28).

4. Dispositif selon l'une quelconque des revendications précédentes, **caractérisé en ce que** lesdites plusieurs spires de l'antenne passive (24) s'étendent où sont destinées à s'étendre sur plus les trois quart de la périphérie (P) de l'interface à antenne (28).

5. Dispositif selon l'une quelconque des revendications précédentes, **caractérisé en ce que** ledit renfoncement (R, R2) a la forme un « U » ou d'un « V » ou « C » ouvert vers la surface interne de l'antenne passive (24).

6. Dispositif selon l'une quelconque des revendications précédentes, **caractérisé en ce qu'**il comporte deux renfoncements (R, R2) recevant ou destinés à recevoir chacun un transpondeur (22, 22b).

7. Dispositif selon la revendication précédente, **caractérisé en ce qu'**il comprend ou est destiné à comprendre un premier transpondeur (22) dans un module à contacts (36) débouchant en surface du dispositif et un second transpondeur non débouchant.

8. Dispositif selon la revendication précédente, **caractérisé en ce que** ledit premier transpondeur (22) est conforme au standard ISO/IEC 14443 de type A et le second (22b) conforme au type B ou inversement.

9. Dispositif selon l'une quelconque des revendications précédentes, **caractérisé en ce que** la surface de couplage de l'antenne passive (A) s'étend de préférence sur une surface qui est environ la moitié de la surface de la carte à puce ISO 7816, soit 81 x 25 mm ou moins.

10. Dispositif selon la revendication précédente, **caractérisé en ce que** l'antenne passive (24) s'étend en dehors d'une zone d'embossage (EMB).

11. Dispositif selon l'une quelconque des revendications précédentes, **caractérisé en ce que** les branches parallèles Cp, Ep) externes du « U » ont un espacement compris entre 5 mm et 15 mm.

12. Dispositif selon l'une quelconque des revendications précédentes, **caractérisé en ce que** le renfoncement (R, R2) est destiné à se positionner à l'aplomb d'un module d'identification d'abonné (SIM) constituant un transpondeur radiofréquence ou de type NFC.
